# EUROPEAN PATENT SPECIFICATION

(11) **EP 2 133 014 B1**
(45) Date of publication and mention of the grant of the patent: **23.06.2010**
(21) Application number: 09162155.7
(22) Date of filing: 08.06.2009
(51) Int. Cl.: A47J 37/06

(54) **Cooker for use with gas stoves**
Kochgefäß zur Verwendung mit Gasherden
Cuisinière à utiliser avec des fours à gaz

(30) Priority: 09.06.2008 KR 20080053613; 09.06.2008 KR 20080053614
(43) Date of publication of application: 16.12.2009
(73) Proprietor: Park, Jun-Gyu, Sesang-gu, Busan (KR)
(72) Inventor: Park, Jun-Gyu, Sesang-gu, Busan (KR)
(74) Representative: Habermann, Gert

(56) References cited:
- DE-A1- 2 409 583
- KR-A- 20080 099 416
- US-A- 3 301 172

## Description

The present invention relates to a cooker for use with a gas stove, which provides uniform heat exposure and at the same time removing smell particles by generating radiation, convection, whirlpool circulation in the lid of the cooker through a reflective plate mounted in the lid. The reflective plate has grooves and ridges evenly provided in whirlpool directions from the centre to the outer edge of the reflective plate so that the gas flame induces descending diffraction and refraction toward the extreme outer edge of the reflective plate after being guided naturally along whirlpool directions. Thus, the present invention provides a cooker having a fast and multidimensional heating system.

Normally, people use a frying pan that is made of metal or ceramic, or other kinds of cookers like plate type or other type of heating metal plate when they cook meat or fish.

In these cases, the heat of the heating plate is first transmitted onto the surface of the cooked food, cooking the part in contact with the heating plate first, so that in order to cook the other side, the cooked food must be turned over, which can be inconvenient.

As oil is added or oil arising from the cooked food is heated, it can produce smoke and smell, and especially when the heating plate is made of metal, the smoke and smell can be hot and offensive as the part of the cooked food coming into contact with the plate starts to burn. The oil and cooked food falling into the heating part can be inflamed, causing safety concerns. Furthermore, the oil particles and smell particles dispersed in the air can pollute clothes, body and environment.

In the case of using a pot for cooking, its use is limited to only those cooked foods with soup or oil because the main source of the heat is conducted only through the metal or ceramic of the cooker, therefore causing inconvenience of using an oven separately for pizza, bread, pie or gratin, etc.

In addition, even though it is possible to cook various kinds of foods deeply and evenly with oven, its preheating can cost a lot of time and it is not suitable for small amounts of food, with considerable limitations.

DE-A-2409583 discloses a cooker according to the preamble of claim 1.

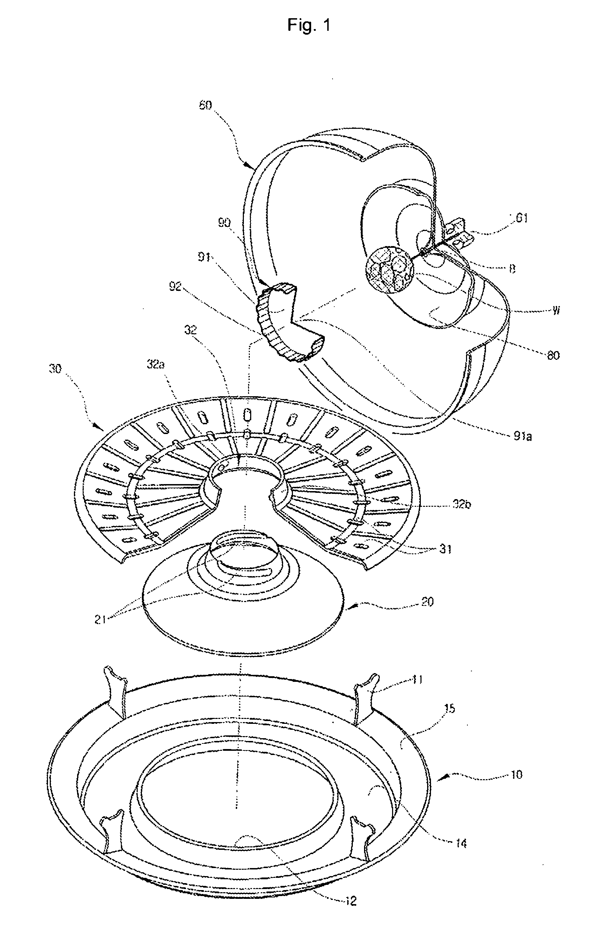

KR 10-2007-0044924 (filing date 9 May 2007) discloses a so-called "Easy Cooker" as shown in the exploded perspective view of Fig. 1.

In the following description of the prior art cooker, reference signs refer to Figs. 1, 2a, 2b, 3a and 3b.

As illustrated in Fig. 1, the cooker of the prior art comprises an oil pan (10), a heating plate (30) and a lid (60) which are assembled and can then be put onto a gas stove.
The oil pan (10) has bottom grooves (14) around a heat passage (12). The grooves (14) are provided to receive cooling water and oil dropping from the cooked food (70). The heating plate (30) which is set onto the oil pan (10) is equipped with a heat inlet duct (32) which intakes flames coming from the gas stove and passing through the heat passage (12). The optional lid covering the heating plate (30) allows direct heating of or conduction of heat to the cooked food (70).

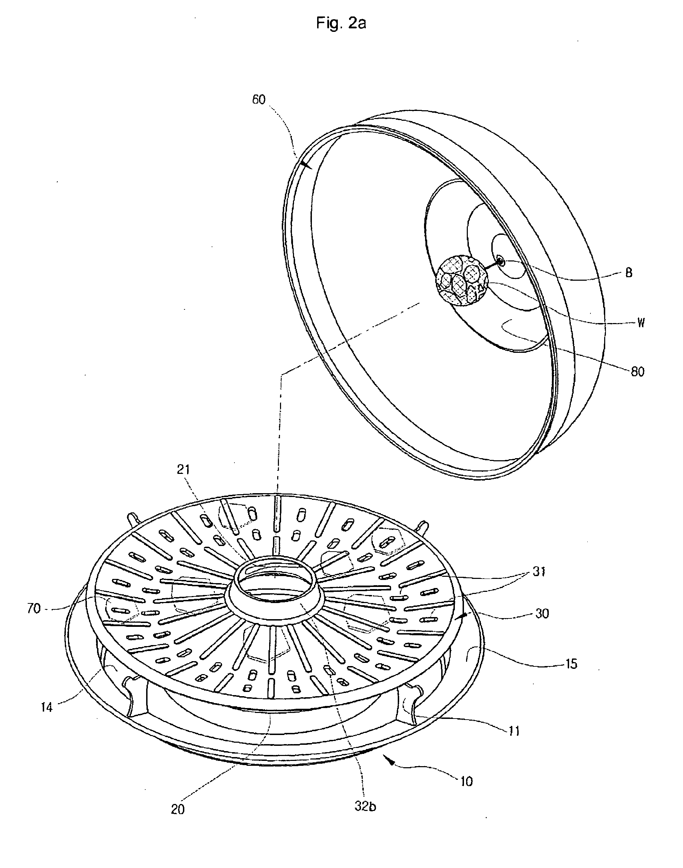

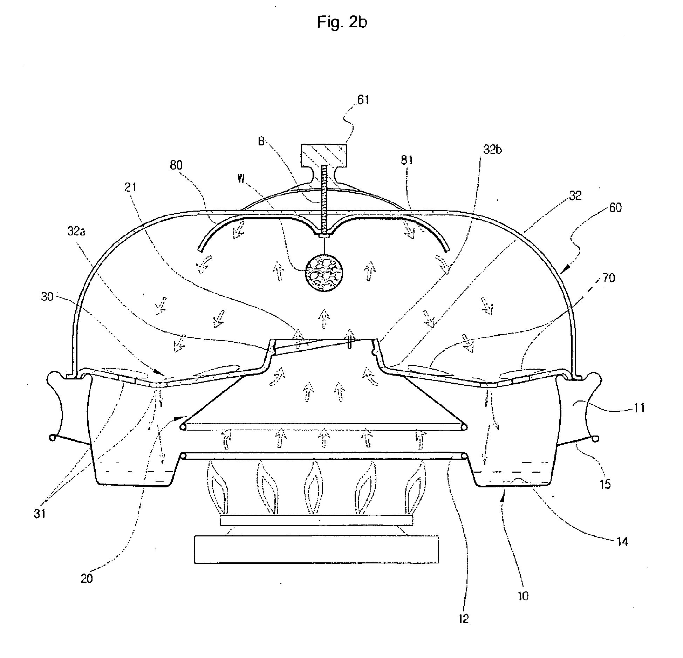

Fig. 2a illustrates the operation of the cooker of the prior art having the lid open. Fig. 2b shows a cross section of the cooker according to the prior art in operation.

As illustrated in Figs. 2a and 2b, an important feature of the prior art cooker is a reflective plate (80) that creates a fountain-shaped diffraction and radiation and convection circulation of the gas flames passing through the heat inlet duct into the ceiling of the lid (60).

This cooker of the prior art enables a uniform heat exposure of the cooked food while removing smell particles at the same time, by generating radiation and convection circulation of the flames passing through the heat passage (32) into the lid. The flames passing through the heat passage (32) ascend gradually forward and hit the centre of the fountain-shaped reflective plate (80). The reflective plate of the prior art cooker is low in its centre, gradually rises in radial directions and descends to its outer edge. Through this design of the prior art reflective plate the flame is diffracted downward back leading to a uniform heat exposure of the cooked food while smell particles are removed at the same time.

The reflective plate (80) according to the prior art cooker is securely bolt (60)-assembled with the handle (61) as one boy which is fixed on the lid (60) to which a far-infrared emitter made of ceramic or quartz-porphyry is attached. This arrangement results in a further improved uniform heat exposure of the cooked food (70), thus improving its feel and taste, by means of far-infrared radiation together with the action of the gas flames passing through the heat inlet duct (32).

It is further desirable that the reflective plate (80) has a ceramic coating (81) to generate forward radiation of the far-infrared emitter in the lid (60).

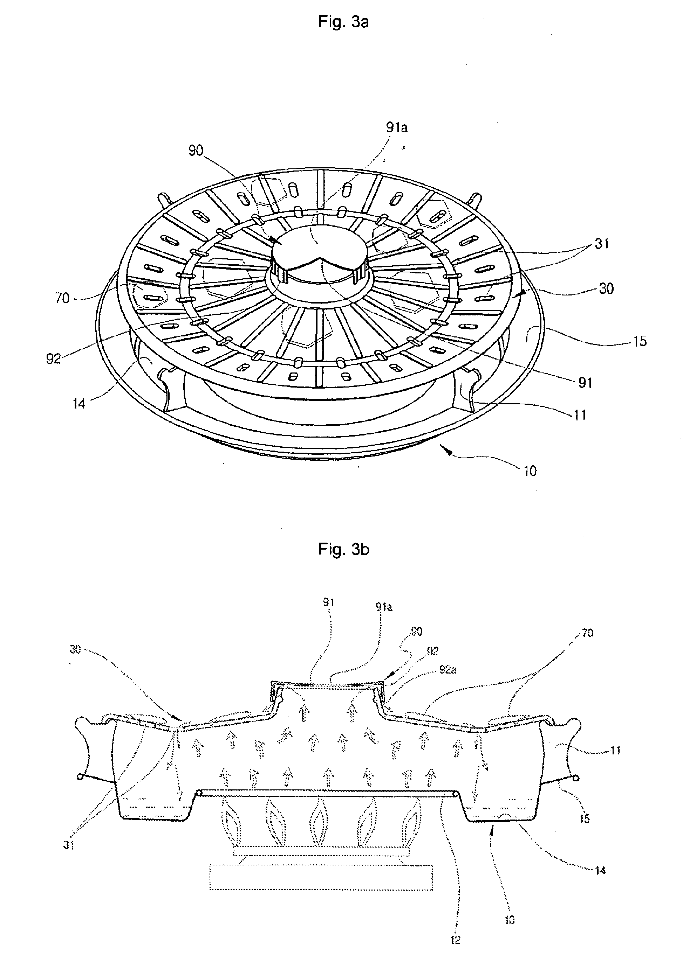

Fig. 3a shows a perspective view of the cooker according to the prior art, and Fig. 3b shows a cross section of the cooker of the prior art, both illustrating its operation.

As illustrated in Figs. 3a and 3b, the prior art cooker has a cap (90) which can both be attached to and detached from a projecting edge (32b) extending towards the upper part of the heat inlet duct (32).

As illustrated in Figs. 2a and 2b, in case a direct heating of the cooked food (70) is desired, cap (90) is removed and the lid (60) is put on the cooker covering it completely enabling radiation and flame circulation. On the other hand, as illustrated in Figs. 3a and 3b, in case cooking of the cooked food (70) by heat conduction through the heating plate (30) is desired, the lid (60) is opened and cap (90) is attached to cover the projecting edge (32b) of the heat inlet duct (32) to block gas flames coming from the heat passage (12) of the oil pan (10) so as to make use of direct heating and conduction heat of the heating plate (30).

The cap can have a wrinkled edge (92) hanging down from the outer circumferential edge of the upper side (91) of the cap (90).

The alternating contact between the projected edge (32b) of the heat inlet duct (32) and the wrinkled edge (92) of the cap (90) provides gaps for the passage of a downward flame: it allows a flame coming from the heat passage (12) to drop partially downwards through the gaps formed between the wrinkled edge (92) of the cap (90) and the projected edge (32b) of the heat inlet duct (32) forming a downward shower-like flame so that the cooked food (70) is not only cooked by conduction heat but is also exposed to a shower flame. This leads to removal of oil from the cooked food and makes the cooked food more delicious.

The cap (90) can have concave grooves (91 a) that gradually descend towards the centre of the upper side (91) facilitating the positioning of some cooked foods such as garlic etc.

The oil pan (10) can have a bent outer edge (15) extending towards the outer side of the bottom groove (14). Props (11) can be provided on the outer edge of the oil pan (10) for supporting the heating plate (30).

The positioning of the props (11) on the oil pan (10) makes the cleaning of the oil pan easier compared to an arrangement in which props (11) would be provided on the bottom groove (14). Furthermore, this arrangement reduces the height of the props (11) also reducing the total weight of the cooker and saving production cost and time.

The heating plate (30) has a minimum height slope towards the bottom groove (14) of the oil pan (10), and it has outlets (31) evenly arranged in radial directions, facilitating the dropping off of oil from the cooked food (70) into the bottom groove (14).

The prior art cooker can have a heat inlet duct (20) guiding flames coming from the heat passage (12) upward. Heat inlet duct (20) is a separate part of the prior art cooker and is designed so as to be tight fitted with the heat inlet duct (32) of the heating plate (30). For assembling the heat inlet duct (20) to the heat inlet duct (32) of the heating plate (30), heat inlet duct (20) has a spiral groove (21) the upper part of which can be screw-joined with an inside projection (32a) of the heat inlet duct (32) of the heating plate 30).

As supported by the props (11) on the outer edge (15) of the oil pan (10), the heating plate (30) and heat inlet duct (20), joined with the heating plate (30), have a raised position so that the gas flames coming from the gas stove pass upward.

The present invention relates to an improved cooker which can have the features of the cooker of the prior art.

An object of the present invention is to provide multi-dimensional heat exposure and quickened cooking time and environment pollution prevention by removing smell particles that occurs during the cooking.

Thus, the technical problem underlying the present invention is to further improve uniform heat exposure of the cooked food and removal of smell particles at the same time.

The solution to the above technical problem is provided by the embodiments of the present invention as defined in the claims.

In particular, the present invention provides a cooker for use with a gas stove comprising an oil pan having a bottom groove around a heat passage opening, a detachable heating plate fitting on the oil pan and having an heat inlet duct, a detachable hemispheric lid covering the heating plate and the oil pan, and a reflective plate mounted centrally inside of said hemispheric lid, wherein said reflective plate is low in the centre, gradually ascends in radial directions and descends towards the outer edge and having troughs and ridges evenly provided in whirlpool directions from the centre to the outer edge of said reflective plate.

Preferably, the lid comprises a metal body having a ceiling hole, and a glass cover which is press-fitted into a bending provided circularly on the inner edge of the ceiling hole.

According to a further preferred embodiment, an upper hole is provided in the centre of the glass cover, a bottom hole is provided in the centre of the reflective plate, a complementary plate having an elliptical hole and extending over the glass cover, an elliptical nut is inserted into the elliptical hole, and a bolt joints with the elliptical nut through the bottom hole and the upper hole.

It is further preferred that a handle is fixed on the outer side of the lid, said handle extending bended towards the centre of the ceiling.

More preferably, the handle has a fixing part being rivet-fixed on the side of the lid, bent towards the centre of the ceiling, and that the handle has a grabbing part into which the fixing is inserted and nut jointed therewith, wherein the grabbing part extends to towards the centre of the ceiling.

According to another preferred embodiment of the invention, the heating plate has outlet holes provided in radial directions towards the bottom groove of the oil pan.

It is further preferred that vent openings are provided in the side wall of the oil pan.

Furthermore, complementary holes can be provided in the wall of the heat passage opening.

A further preferred embodiment of the cooker according to the invention is characterised in that the heat passage opening extends upward and having a decreasing diameter to meet with the heat inlet duct of the heating plate.

The present invention provides excellent uniform heat exposure of the cooked food and removal of smell particles by generating radiation, convection and whirlpool circulation in the lid by using the reflective plate as defined-above. After the gas flame coming from the heat inlet duct hits the centre of the reflective plate, the design of the reflective plate of the cooker of the present invention leads to a descending diffraction and refraction of the flame towards the extreme outer edge of the reflective plate whereby the flame is guided along whirlpool directions by the troughs and ridges present in the reflective plate.

The bottom part of the lid is preferably made of metal for durability reasons. More preferably, the lid of the cooker of the invention has a ceiling part made of glass such that the cooked food is visible.

The assemblability of the reflective plate into the lid is improved by a preferred embodiment of the present cooker in which a complementary plate has an elliptical hole into which an elliptical nut can be inserted thereby enabling a simple fixing by turning the bolt through grabbing of the broad area of the complementary plate by hand to tighten the bolt.

According to a preferred embodiment of the present invention, a handle is fixed on the outer side of the lid, which handle is bent and extends towards the centre of the ceiling providing a parallel arrangement of the bent area of the handle and the outer side of the lid (metal body thereof) so as to provide a stand for putting the lid in an upright position saving space and preventing the edge of the lid from being contaminated with dirt.

The present invention is further illustrated by the drawings in which:
- Fig. 1: is an exploded perspective view of a cooker according to the prior art.
- Fig. 2a: is an exploded perspective view of a cooker according to the prior art showing the heating plate and oil pan assembled and the lid open.
- Fig. 2b: shows a cross section view of the cooker according to the prior art in assembled state.
- Fig. 3a: show a perspective view of the cooker according to the prior art wherein the heating plate and oil pan assembled and provided with a cap.
- Fig. 3b: shows a cross section view of the cooker according to the prior art wherein the heating plate and oil pan assembled and provided with a cap.
- Fig. 4: shows an exploded perspective view of the parts of a preferred embodiment of the cooker according to the present invention.
- Fig. 5a: shows an exploded perspective view of a preferred embodiment of the cooker of the invention wherein the oil pan and heating plate are assembled and the lid being opened.
- Fig. 5b: shows a cross section view of a preferred embodiment of the cooker according to the invention wherein the oil pan, heating plate and lid are assembled.
- Fig. 5c: shows a perspective view of the under side of a reflective plate according to the present invention.
- Fig. 6: shows an exploded perspective view of the lid of a preferred embodiment of the cooker according to the invention.
- Fig. 7: shows a perspective view of the lid of a preferred embodiment of the cooker of the invention standing in an upright position.
- Fig. 8a: shows a photographic representation of a preferred embodiment of the cooker according to the invention in its assembled form.
- Fig. 8b: shows a photographic representation of a preferred embodiment of the cooker according to the invention wherein heating plate and oil pan are assembled and the lid is disassembled.

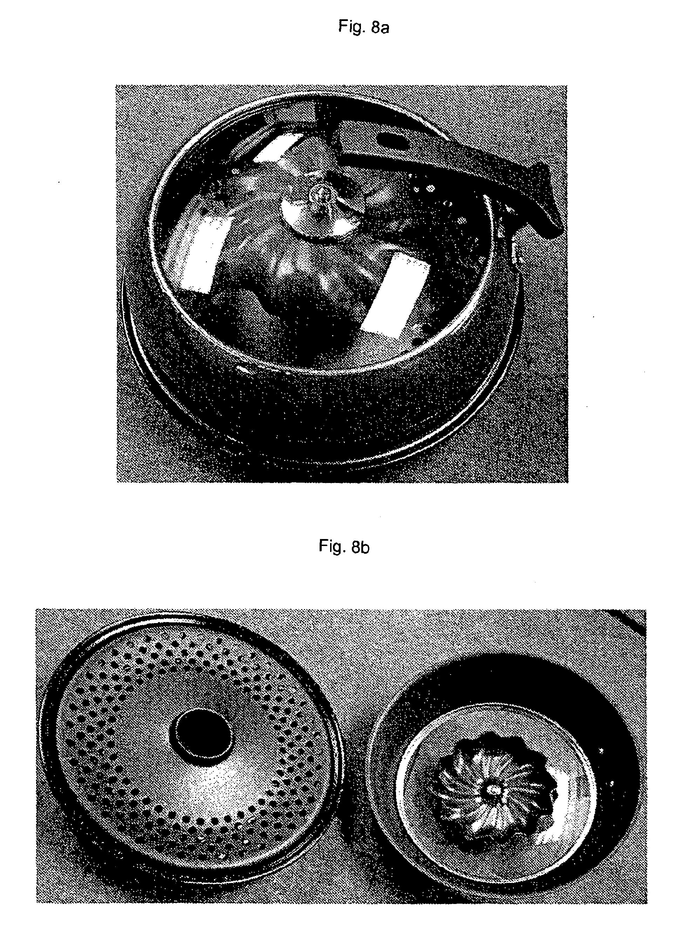

- Fig. 8b: shows a photographic representation of the main three parts (oil pan, heating plate, lid) of a preferred embodiment of the cooker according to the invention.

The present invention is further described in more detail with reference to the accompanying drawings in which like reference signs refer to like features of the cooker according to the invention. It is to be understood that the following detailed description is by no way intended to limit the scope of the present invention to the described preferred embodiments.

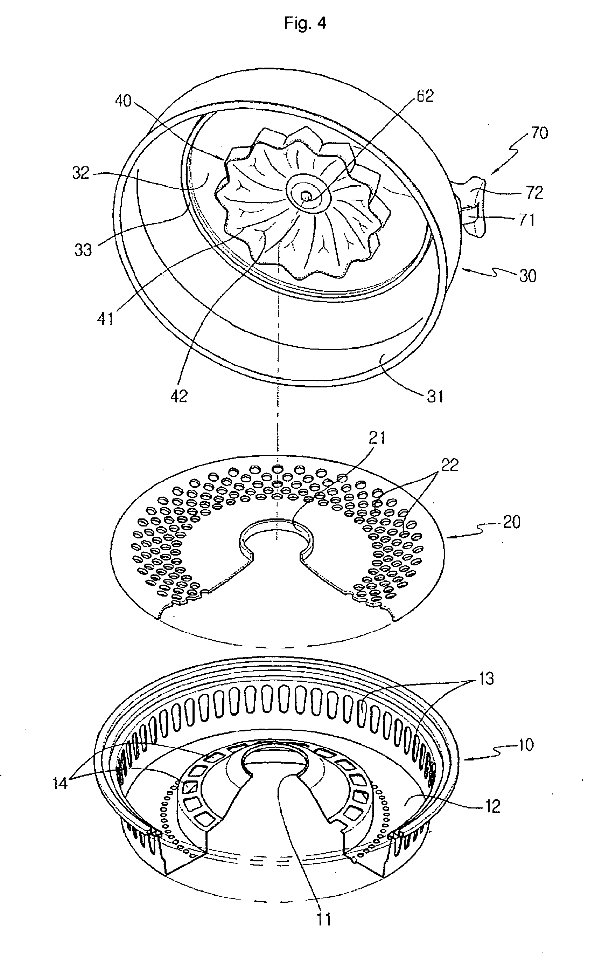

Fig. 4 shows an exploded perspective view of a cooker according to the invention comprising oil pan (10), heating plate (20) and lid (30) which can be put one by one on a gas stove.

The oil pan (10) has bottom groove (12) around heat passage opening (11) for receiving liquids (cooling water; oil and fat falling down from the cooked food present on the heating plate (20)). The heating plate (20) which is set on the oil pan (10) has a heat inlet duct (21) which intakes the gas flame coming from the heat passage opening (11).

According to an especially preferred embodiment of the present invention, the heat passage opening (11) is formed as a "rising pipe", i.e. the heat passage opening (11) in the bottom of the oil pan (10) extends upwards and has a decreasing diameter so as to meet with the heat inlet duct (21) of the heating plate (20). This embodiment of the present invention further provides for a short cooking time even in case of use of low amount of heat and without burning of the cooked food, thereby saving energy. The gradually decreasing diameter of the heat passage opening towards the upper part of the centre of the oil pan (10) guides the flames of the gas stove directly into the heat inlet duct (21) of the heating plate (20) and into the lid (30).

The lid (30) has a hemispheric shape allowing direct transfer of heat and conduction heat to the cooked food.

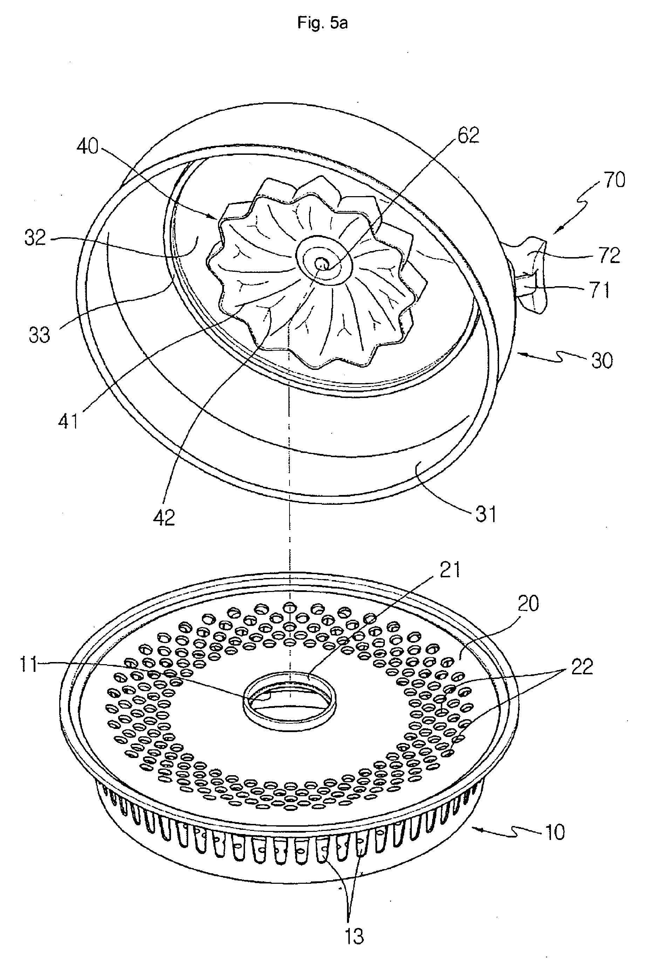

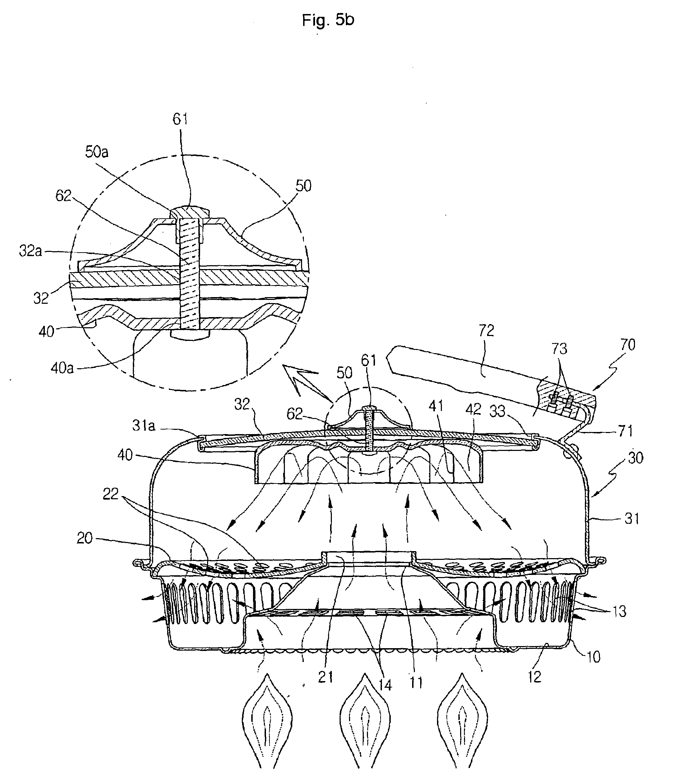

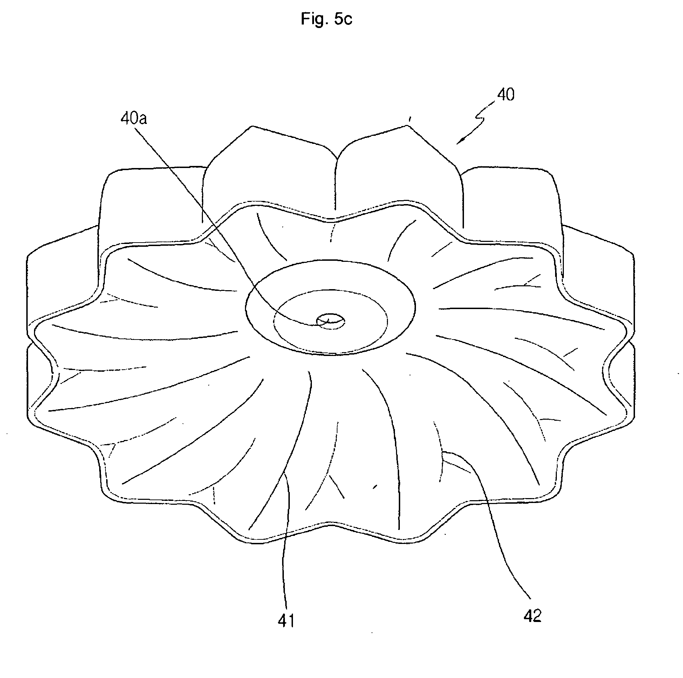

As illustrated in Figs. 5a and 5c, the cooker of the present invention comprises a reflective plate (40) creating diffraction, radiation and convection circulation of the flame(s) passing through the heat inlet duct (21) into the lid (30).

More specifically, reflective plate (40) is designed to be low in its centre and ascending in radial directions and descending again towards the outer edge and having grooves (41) and ridges (42) evenly provided in whirlpool directions from the centre to the outer edge of the reflective plate (40).

The characteristics of the reflective plate (40) guide the flame which comes from the rising pipe (11), gradually ascends through the inlet duct (21) and hits the centre of the reflective plate (40), into whirlpool directions along the grooves (41) and ridges (42) so as to generate radiation, convection and whirlpool circulation inside the lid (30), thereby creating a uniform heat exposure of the cooked food while efficiently removing smell particles at the same time. In particular, the design of the reflective plate according to the present invention provides a multidimensional heat exposure by guiding the flame and the heat flow into whirlpool directions along the grooves (41) and ridges (42) of the reflective plate.

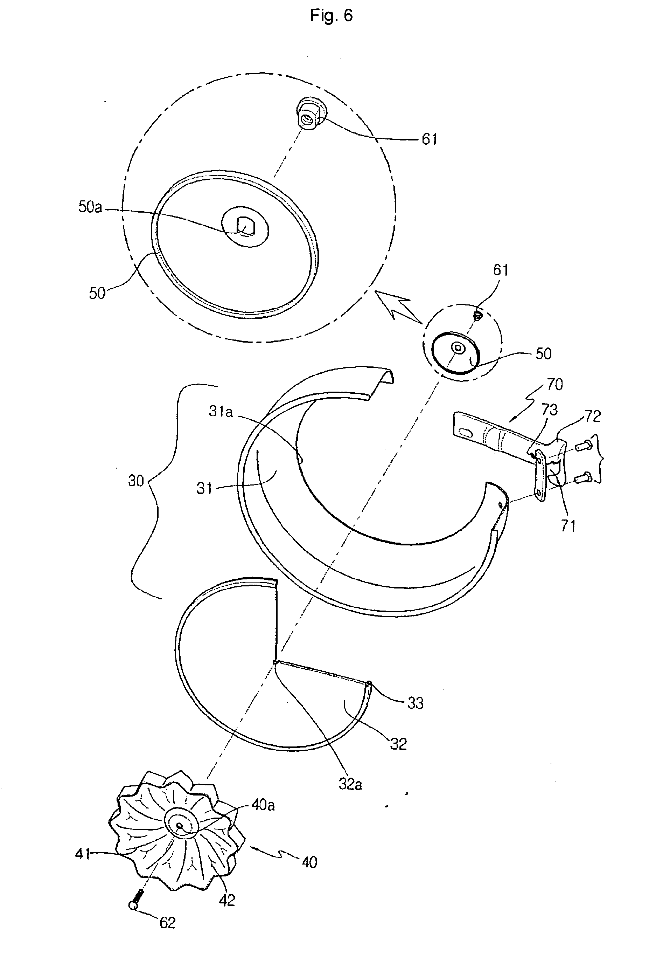

As shown in Fig. 6, lid (30) has a metal body (31) having a ceiling hole (31 a). The metal body (31) is supported by the oil pan (10) and has a glass cover (32) provided in the ceiling hole (31a) by press-fitting into a bending (33) provided circularly on the inner edge of the ceiling hole (31 a).

The bottom part (31) of the lid (30) coming into contact with the oil pan (10) is preferably made of metal for durability reasons. The glass cover (32) is press-fitted into the bending (33) around the ceiling hole (31 a) on the top of the lid (30) enables visibility of the cooked food without burning of said cooked food.

Lid (30) includes an upper hole (32a) passing the centre of the glass cover (32), and a bottom hole (40a) is provided in the centre of the reflective plate (40), a complementary plate (50) having elliptical hole (50a) is provided over the glass cover (32). An elliptical nut (61) (having an elliptical outer edge) is inserted into the elliptical hole (50a) of the complementary plate (50), and a bolt (60) joints with elliptical nut (61) through bottom hole (40a) and upper hole (32a).

The elliptical nut (61) inserted into elliptical hole (50a) prevents an idle turning of the nut and the complementary plate (50) against each other. Thus, complementary plate (50) can be easily fixed by turning the bolt (62) through the bottom hole (40a) into the nut (61) and by grasping the broad area of the complementary plate (50), thus improving the assemblability.

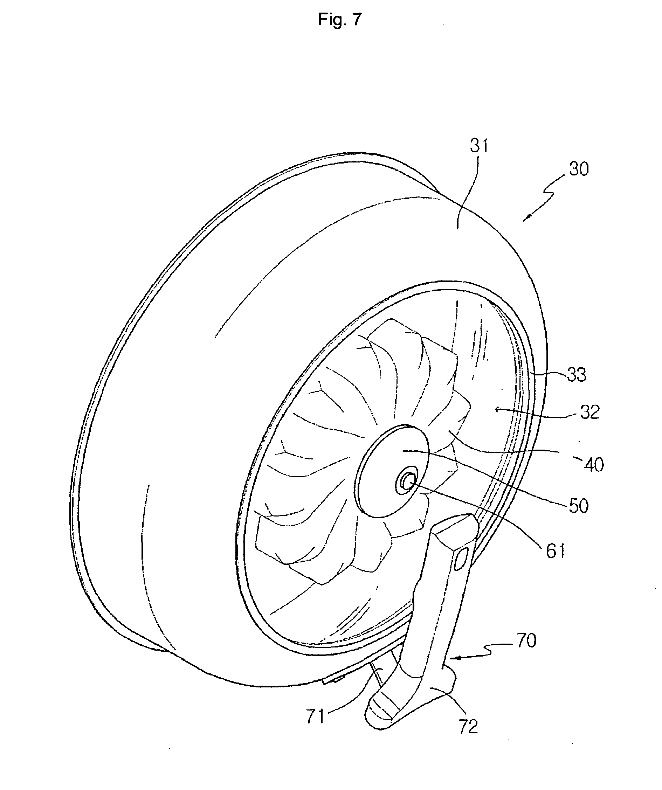

As illustrated in Fig. 7, a handle (70) is fixed on the outer side of the lid (30). Handle (70) is bent and extends towards the centre of the ceiling. The bent area of the handle (70) and the outer side of the lid [the metal body part] are arranged in parallel so that the lid (30) can be standing on the ground in an upright position.

More specifically, handle (70) is rivet-fixed on the outer side of the lid (30), more preferably on the outer side of the metal body (31). Handle (70) comprises a grabbing part (72) extending towards the centre of the ceiling of the lid (30) and a fixing part (71) being rivet-fixed on the outer side of the lid, which fixing is inserted into the grabbing part (72) and hold in place by a nut (73).

Thus, the fixing (71) can be rivet fixed on the side of the metal body (31) maximizing the mutual fixing power. Furthermore, the grabbing part (72) is also nut fixed to the fixing part (71) thereby resulting in a simple harmonic shape with the lid (30) and in a simple assemblability.

Outlet holes (22) are evenly provided in the heating plate (20) in radial directions towards the bottom groove (12) facilitating the free fall and collection of oil coming from the cooked food. Flames passing through the heat inlet duct (21) ascend gradually forward and hit the reflective plate (40) where they are guided in whirlpool directions through the troughs (41) and ridges (42) of the reflective plate (40) so that said flames are diffracted and refracted down towards the outer edge of the reflective plate (40) and create radiation, convection and whirlpool circulation in the lid (30). The flames then pass through the outlet holes (22) of the heating plate (20) before being discharged through vent openings (13) in the oil pan (10). This design of the present embodiment of the cooker of the invention allows a smooth flow of the flames and heat. In comparison to the prior art cooker, the cooker of the present invention does not require props which improves productivity and reduces material need, and allows a reduction of the overall size of the cooker (due to the height of the props in the prior art cooker).

The oil pan (10) can further include complementary holes (14) in the protruding wall of the heat passage opening (11). Smell particles are thus totally burnt by flames coming through the complementary holes (14). On the other hand, overheating of the oil pan (10) by dispersing the flame of the gas stove through the heat passage opening (11) and the complementary holes (14) is avoided, thereby preventing the burning of fat collected in the bottom groove (12), thus enabling clean and easy indoor cooking.

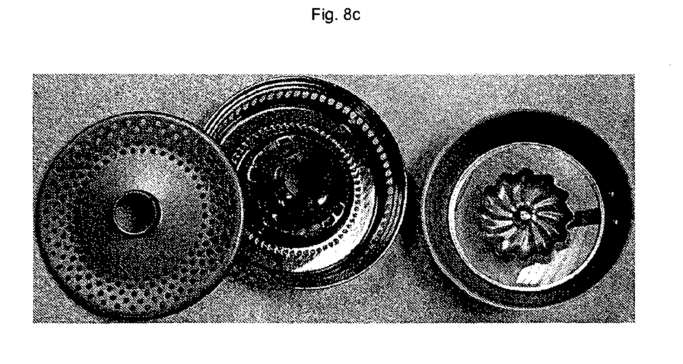

The operation of the cooker according to the present invention is further illustrated as follows:
As shown in Figs. 4 and 8c, respectively, oil pan (10), heating plate (20) and lid (30) need first to be put on the gas stove one by one for direct use of the flames going through the heat passage opening (11) of the oil pan (10).

When the flames pass through the heat passage opening (11) and the inlet duct (21) and ascend towards the reflective plate and hit same in its centre, diffraction, radiation, convection and whirlpool circulation of the flames take place along the troughs (41) and ridges (42) of the reflective plate being assembled in the ceiling, thereby providing the cooked food with uniform heat exposure.

Oil and fat coming from the cooked food falls through the outlet holes (22) provided in the heating plate (20) into the bottom groove (12) of the oil pan (10) while the oil leaking from the cooked food is cleaned by the diffraction, radiation, convection and whirlpool circulation of the flames that take place along the whirlpool shape of the reflective plate (40). Furthermore, smell particles contained in the heat flow escaping through the outlet holes (22) of the heating plate (20) are totally burnt by the flames coming through the complementary holes (14), before the heat flow is discharged through the vent openings (13) in the side wall of the oil pan (10).

It is also desirable to set the flame temperature for slow cooking of the cooked food, making use of the circulating heat.

When the cooking of the food is complete, the flame of the gas stove is turned off, and the lid (30) of the cooker is lifted by grabbing the handle (70) and putting it into an upright position on the ground or table making use of the special design of the handle in co-operation with the hemispheric form of the lid (30).

## Claims

1. Cooker for use with a gas stove comprising an oil pan (10) having a bottom groove (12) around a heat passage opening (11), a detachable heating plate (20) fitting on the oil pan (10) and having an heat inlet duct (21), a detachable hemispheric lid (30) covering the heating plate and the oil pan (10), and a reflective plate (40) mounted centrally inside of said hemispheric lid,
**characterised in that**
said reflective plate (40) is low in the centre, gradually ascends in radial directions and descends towards the outer edge and having troughs (41) and ridges (42) evenly provided in whirlpool directions from the centre to the outer edge of said reflective plate (40).

2. The cooker of claim 1 **characterised in that** the lid (30) comprises a metal body having a ceiling hole (31a), and a glass cover which is press-fitted into a bending (33) provided circularly on the inner edge of the ceiling hole (31a).

3. The cooker of claim 2 **characterised in that** an upper hole (32a) is provided in the centre of the glass cover (32), a bottom hole is provided in the centre of the reflective plate, a complementary plate (40a) having an elliptical hole (50a) and extending over the glass cover (32), an elliptical nut (61) is inserted into the elliptical hole (50a), and a bolt joints with the elliptical nut through the bottom hole (40a) and the upper hole (32a).

4. The cooker according to any one of the preceding claims **characterised in that** a handle (70) is fixed on the outer side of the lid (30), said handle extending bended towards the centre of the ceiling.

5. The cooker of claim 4 **characterised in that** the handle has a fixing (71) being rivet-fixed on the side of the lid (30), bent towards the centre of the ceiling, and that the handle has a grabbing part (72) into which the fixing is inserted and nut jointed therewith, wherein the grabbing part extends to towards the centre of the ceiling.

6. The cooker according to any one of the preceding claims **characterised in that** the heating plate (20) has outlet holes (22) provided in radial directions towards the bottom groove (12) of the oil pan (10).

7. The cooker of claim 6 **characterised in that** vent openings (13) are provided in the side wall of the oil pan (10).

8. The cooker according to any one of the preceding claims **characterised in that** complementary holes (14) are provided in the wall of the heat passage opening (11).

9. The cooker according to any one of the preceding claims **characterised in that** the heat passage opening (11) extends upward and having a decreasing diameter to meet with the heat inlet duct (21) of the heating plate (20).

## Patentansprüche

1. Kocher zur Verwendung mit einem Gasofen, umfassend eine Ölpfanne (10) mit einer Bodenrinne (12) um eine Hitzedurchlassöffnung (11), eine
abnehmbare auf die Ölpfanne (10) passende und einen Hitzeeinlasskanal (21) aufweisende Heizplatte (20), einen abnehmbaren halbkugelförmigen Deckel (30), der die Heizplatte und die Ölpfanne (10) bedeckt, und einer reflektierenden Platte (40), die mittig in dem halbkugelförmigen Deckel angeordnet ist,
**dadurch gekennzeichnet, dass**
die reflektierende Platte (40) in der Mitte tief ist, graduell in radialer Richtung ansteigt und in Richtung des äußeren Rands absteigt und Vertiefungen (41) und Erhöhungen (42) aufweist, die gleichmäßig in wirbelstromförmigen Richtungen von der Mitte zum äußeren Rand der Reflektierung (40) angeordnet sind.

2. Kocher nach Anspruch 1, **dadurch gekennzeichnet, dass** der Deckel (30) einen Metallkörper mit einer Gewölbeöffnung (31a) und eine Glasabdeckung umfasst, die in eine Wölbung (33) eingepresst ist, welche umlaufend an der inneren Kante der Gewölbeöffnung (31a) vorgesehen ist.

3. Kocher nach Anspruch 2, **dadurch gekennzeichnet, dass** in der Mitte der Glasabdeckung (32) ein oberes Loch (32a) vorgesehen ist, ein Bodenloch in der Mitte der reflektierenden Platte vorgesehen ist, eine komplementäre Platte (40a) ein elliptisches Loch (50a) aufweist und über die Glasabdeckung (32) hinausreicht, eine elliptische Mutter (61) in das elliptische Loch (50a) eingeführt wird und ein Bolzen mit der elliptischen Mutter durch die Bodenöffnung (40a) und die obere Öffnung (32a) verbunden ist.

4. Kocher nach einem der vorhergehenden Ansprüche, **dadurch gekennzeichnet, dass** ein Griff (70) auf der äußeren Seite des Deckels (30) angebracht ist, wobei der Griff sich gebogen zur Mitte des Gewölbes erstreckt.

5. Kocher nach Anspruch 4, **dadurch gekennzeichnet, dass** der Griff eine Befestigung (71) aufweist, die auf der Seite des Deckels (30) mit Nieten befestigt ist, in Richtung der Mitte des Gewölbes gebogen ist, und dass der Griff ein Greifteil (72) aufweist, in das die Befestigung eingeführt und durch Muttern damit verbunden ist, wobei das Greifteil sich in Richtung der Mitte des Gewölbes erstreckt.

6. Kocher nach einem der vorhergehenden Ansprüche, **dadurch gekennzeichnet, dass** die Heizplatte (20) Auslassöffnungen (22) aufweist, die in radialer Richtung zur Bodenrinne (12) der Ölpfanne (10) hin angeordnet sind.

7. Kocher nach Anspruch 6, **dadurch gekennzeichnet, dass** Belüftungsöffnungen (13) in der Seitenwand der Ölpfanne (10) vorgesehen sind.

8. Kocher nach einem der vorhergehenden Ansprüche, **dadurch gekennzeichnet, dass** komplementäre Löcher (14) in der Wand der Hitzedurchlassöffnung (11) vorgesehen sind.

9. Kocher nach einem der vorhergehenden Ansprüche, **dadurch gekennzeichnet, dass** die Hitzedurchlassöffnung (11) sich nach oben erstreckt und einen abnehmenden Durchmesser aufweist, um mit dem Hitzeeinlasskanal (21) der Heizplatte (20) zusammenzutreffen.

## Revendications

1. Appareil de cuisson destiné à être utilisé avec un four à gaz comprenant un bac à huile (10) ayant une rainure inférieure (12) autour d'une ouverture de passage de chaleur (11), une plaque chauffante détachable (20) se montant sur le bac à huile (10) et ayant un conduit d'entrée de chaleur (21), un couvercle hémisphérique détachable (30) recouvrant la plaque chauffante et le bac à huile (10) et une plaque réfléchissante (40) montée de manière centrale à l'intérieur dudit couvercle hémisphérique,
**caractérisé en ce que** :
ladite plaque réfléchissante (40) est enfoncée dans le centre, monte progressivement dans les directions radiales et descend vers le bord externe et
ayant des creux (41) et des parties saillantes (42) prévus régulièrement dans les directions de tourbillon du centre jusqu'au bord externe de ladite plaque réfléchissante (40).

2. Appareil de cuisson selon la revendication 1, **caractérisé en ce que** le couvercle (30) comprend un corps métallique ayant un trou de plafond (31a) et un couvercle en verre qui est monté par pression dans une courbure (33) prévue de manière circulaire sur le bord interne du trou de plafond (31a).

3. Appareil de cuisson selon la revendication 2, **caractérisé en ce qu'**un trou supérieur (32a) est prévu au centre du couvercle en verre (32), un trou inférieur est prévu dans le centre de la plaque réfléchissante, une plaque complémentaire (40a) ayant un trou elliptique (50a) et s'étendant sur le couvercle en verre (32), un écrou elliptique (61) est inséré dans le trou elliptique (50a) et un boulon est assemblé à l'écrou elliptique par le biais du trou inférieur (40a) et du trou supérieur (32a).

4. Appareil de cuisson selon l'une quelconque des revendications précédentes, **caractérisé en ce qu'**une poignée (70) est fixée sur le côté externe du couvercle (30), ladite poignée s'étendant courbée vers le centre du plafond.

5. Appareil de cuisson selon la revendication 4, **caractérisé en ce que** la poignée a une fixation (71) qui est fixée par rivet sur le côté du couvercle (30), courbée vers le centre du plafond et **en ce que** la poignée a une partie de préhension (72) dans laquelle la fixation est insérée et l'écrou assemblé avec celle-ci, dans lequel la partie de préhension s'étend vers le centre du plafond.

6. Appareil de cuisson selon l'une quelconque des revendications précédentes, **caractérisé en ce que** la plaque chauffante (20) a des trous de sortie (22) prévus dans les directions radiales vers la rainure inférieure (12) du bac à huile (10).

7. Appareil de cuisson selon la revendication 6, **caractérisé en ce que** des ouvertures d'aération (13) sont prévues dans la paroi latérale du bac à huile (10).

8. Appareil de cuisson selon l'une quelconque des revendications précédentes, **caractérisé en ce que** des trous complémentaires (14) sont prévus dans la paroi de l'ouverture de passage de chaleur (11).

9. Appareil de cuisson selon l'une quelconque des revendications précédentes, **caractérisé en ce que** l'ouverture de passage de chaleur (11) s'étend vers le haut et a un diamètre décroissant pour rencontrer le conduit d'entrée de chaleur (21) de la plaque chauffante (20).
